(19) **Europäisches Patentamt / European Patent Office / Office européen des brevets**

(11) **EP 2 241 856 A1**

(12) **DEMANDE DE BREVET EUROPEEN**

(43) Date de publication:
**20.10.2010 Bulletin 2010/42**

(51) Int Cl.:
*G01C 21/16* [(2006.01)]    *G01S 5/14* [(2006.01)]

(21) Numéro de dépôt: **10159113.9**

(22) Date de dépôt: **06.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **17.04.2009 FR 0901700**

(71) Demandeur: **Thales**
**92200 Neuilly Sur Seine (FR)**

(72) Inventeurs:
• **Monrocq, Stéphane**
  **26000, VALENCE (FR)**
• **Juillaguet, Sébastien**
  **26300, BOURG DE PEAGE (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(54) **Systeme inertiel hybride a comportement non lineaire et procede d'hybridation par filtrage multi hypotheses associe**

(57) Système inertiel hybride embarqué dans un porteur mobile comportant une unité de mesures inertielles (10), au moins une plateforme d'intégration de données inertielles (11,302), au moins un capteur extérieur (12) et un filtre d'hybridation multi hypothèses, ledit système étant **caractérisé en ce que** ledit filtre d'hybridation met en oeuvre au moins les étapes suivantes :
○ une étape d'initialisation effectuant la génération d'une pluralité de vecteurs d'états

○ une étape de recalage (203) exécutant, pour chacun desdits vecteurs d'états, la phase de recalage d'un filtrage de Kalman étendu
○ une étape de propagation (208) exécutant, pour chacun desdits vecteurs d'états, la phase de propagation d'un filtrage de Kalman étendu
○ une étape de détermination de la vraisemblance $q^i_t$ dudit vecteur d'état recalé
○ une étape de calcul (210,301) de corrections inertielles (211,306)

FIG.2

## Description

La présente invention a pour objet un procédé d'hybridation d'un système inertiel par filtrage multi hypothèses ainsi que le système inertiel hybride associé. Elle s'applique notamment dans le cadre de systèmes inertiels dont un but est de déterminer la localisation et la navigation d'un mobile, par exemple un aéronef. Ces systèmes comprennent au moins une unité de mesures inertielles dont les sorties peuvent avoir des comportements non linéaires ainsi qu'un ensemble de capteurs extérieurs produisant des mesures instantanées caractérisant la localisation et/ou la navigation dudit mobile. Une application d'un tel système est, par exemple, la navigation d'un aéronef.

Une unité de mesure inertielle est traditionnellement composée de plusieurs senseurs inertiels qui délivrent une ou plusieurs mesures décrivant le mouvement du mobile. Un senseur inertiel peut être un gyromètre qui délivre une mesure de la vitesse angulaire du mobile ou un accéléromètre qui délivre une mesure de l'accélération du mobile. Ces mesures peuvent être entachées d'erreurs que l'on appellera par la suite défauts inertiels et peuvent, de plus, avoir un comportement non linéaire. Par exemple, des sauts d'amplitude peuvent être observés sur lesdites mesures fournies par le senseur inertiel. Ces sauts, ou de façon plus générale, ces non linéarités peuvent être dues à des imperfections de fonctionnement des senseurs, à une sensibilité forte aux changements de température, aux vibrations ou encore à l'impact de changements brusques du profil de mouvement du mobile. Un des buts de la présente invention est de mettre en oeuvre un procédé d'hybridation d'un système inertiel par des mesures instantanées d'une ou plusieurs composantes caractéristiques de la localisation et/ou de la navigation du mobile et fournies par un ensemble de capteurs externes.

De plus, l'invention propose une solution permettant de prendre en compte le comportement non linéaire des défauts des senseurs inertiels et basée sur l'utilisation d'un filtre multi hypothèses permettant d'identifier ces défauts et au final de corriger de façon précise les erreurs impactant l'estimation de la localisation et de la navigation du mobile. Le filtre multi hypothèses selon l'invention est notamment basé sur le principe d'effectuer plusieurs hypothèses sur les défauts des senseurs inertiels puis de déterminer laquelle est la plus vraisemblable.

L'hybridation de systèmes inertiels avec d'autres capteurs externes est traditionnellement réalisée à partir d'un filtrage de Kalman étendu connu sous l'abréviation anglo-saxonne EKF (Extended Kalman Filter). Cette méthode robuste est couramment utilisée pour de nombreuses applications, notamment pour des hybridations effectuées à l'aide de capteurs de pression, de magnétomètres, de systèmes de positionnement par satellite, ou encore de radioaltimètres. Cependant le bon fonctionnement du filtre de Kalman étendu repose sur deux hypothèses: la linéarité de la propagation de ses états et de ses observations ainsi que l'hypothèse que les bruits affectant le système suivent une loi Gaussienne. En particulier, lorsque les mesures fournies par les senseurs inertiels n'ont pas un comportement linéaire, le filtre de Kalman étendu n'est pas adapté ou reste largement sous optimal.

La demande de brevet international WO00/73815 propose une solution permettant de pallier les non linéarités des défauts des senseurs inertiels. Cette méthode est basée sur l'utilisation de réseaux de neurones et ne repose pas du tout sur les principes du filtre de Kalman étendu. De plus cette demande revendique un système inertiel utilisant uniquement des capteurs externes de type GNSS.

La présente invention propose une solution utilisant en partie les principes du filtrage de Kalman étendu mais en l'adaptant à un filtrage multi hypothèses permettant de prendre en compte et d'estimer correctement le comportement non linéaire des défauts des senseurs inertiels.

A cet effet l'invention a pour objet un système inertiel hybride embarqué dans un porteur mobile comportant une unité de mesures inertielles délivrant des mesures de variation d'angle $\Delta\theta$ et/ou des mesures de variation de vitesse $\Delta V$, au moins une plateforme d'intégration de données inertielles recevant les mesures de variation d'angle $\Delta\theta$ et/ou les mesures de variation de vitesse $\Delta V$ et produisant des mesures instantanées de la localisation et/ou de la navigation dudit porteur mobile, au moins un capteur extérieur délivrant des mesures d'observation de la localisation et/ou de la navigation dudit porteur mobile et un filtre d'hybridation multi hypothèses recevant lesdites mesures instantanées et lesdites mesures d'observation et délivrant des corrections aux plateformes d'intégration de données inertielles lesquelles délivrent une estimation hybride de la localisation et/ou de la navigation dudit porteur mobile, ledit système étant **caractérisé en ce que** ledit filtre d'hybridation multi hypothèses met en oeuvre au moins les étapes suivantes :

○ une étape d'initialisation effectuant la génération d'une pluralité de vecteurs d'états $XP^i_0$ représentatifs de l'état dudit système inertiel comprenant d'une part au moins un état dédié à la localisation et/ou à la navigation dudit porteur mobile et d'autre part des hypothèses de défauts de l'unité de mesures inertielles,
○ une étape de recalage exécutant, pour chacun desdits vecteurs d'états, la phase de recalage d'un filtrage de Kalman étendu et produisant en sortie un vecteur d'état recalé $XE^i_t$ et sa matrice de covariance associée $PE^i_t$,
○ une étape de propagation exécutant, pour chacun desdits vecteurs d'états, la phase de propagation d'un filtrage de Kalman étendu et produisant en sortie un vecteur d'état propagé $XP^i_t$, sa matrice de covariance associée $PP^i_t$, et leur vraisemblance associée $q^i_t$,
○ une étape de détermination de la vraisemblance $q^i_t$ dudit vecteur d'état recalé $XE^i_t$, en fonction de la comparaison entre les données d'observations et le vecteur d'état propagé,

○ une étape de calcul de corrections recevant la pluralité de vecteurs d'états propagés $XP^i_t$, leurs matrices de covariance associées $PP^i_t$ et leur vraisemblance associée $q^i_t$ et produisant lesdites corrections inertielles des erreurs de position et de mouvement dudit mobile porteur, lesdites corrections étant délivrées aux plateformes d'intégration de données inertielles.

Dans une variante de réalisation de l'invention la vraisemblance $q^i_t$ du vecteur d'état $XE^i_t$, est déterminée en fonction de la comparaison entre le vecteur $Z_t$ de données d'observations et le vecteur d'état propagé $XP^i_{t-1}$ à l'aide de la relation suivante : $q^i_t = p_{e(t)}\left(Z_t - H.XP^i_{t-1}\right)$, où H est une matrice d'observation définie à l'aide d'un filtrage de Kalman étendu et $p_{e(t)}()$ est une fonction de probabilité Gaussienne donnée par la relation suivante :

$$ p_{e(t)}\left(Z_t - H.XP^i_{t-1}\right) = \left(\frac{1}{2\pi}\right)^{N/2} \frac{1}{\sqrt{|R_t|}} \exp\left(-\frac{1}{2}\left[Z_t - H.XP^i_{t-1}\right]^T R_t^{-1}\left[Z_t - H.XP^i_{t-1}\right]\right), $$

Dans une variante de réalisation de l'invention la vraisemblance $q^i_t$ obtenue est filtrée à l'aide d'un filtre passe bas.

Dans une variante de réalisation de l'invention ladite étape de calcul de corrections met en oeuvre la somme des corrections obtenues à partir de chaque hypothèse de vecteur d'état, chaque correction étant pondérée par la vraisemblance $q^i_t$ du vecteur d'état correspondant.

Dans une variante de réalisation de l'invention ledit système inertiel hybride comporte une plate forme d'intégration pour chaque hypothèse de vecteur d'état, ladite étape de calcul de corrections délivre une correction indépendante à chaque plate forme d'intégration et ledit système inertiel hybride comporte en plus une étape de calcul de sorties de filtrage qui reçoit l'ensemble des estimations hybrides délivrées par chacune des plateformes d'intégration et en effectue la somme pondérée par chacune des vraisemblances $q^i_t$ associées afin de produire une estimation hybride unique.

Dans une variante de réalisation de l'invention ledit système inertiel hybride met en oeuvre une architecture dite en boucle ouverte et lesdites corrections sont ajoutées directement à l'estimation hybride des données de localisation et de navigation dudit porteur mobile.

Dans une variante de réalisation de l'invention ledit filtre d'hybridation multi-hypothèses exécute en plus une étape de mise à jour des particules au cours de laquelle lesdites hypothèses de défauts de l'unité de mesures inertielles déterminés pendant la phase d'initialisation sont mises à jour en fonction d'une connaissance a priori du comportement de ladite unité de mesures inertielles, les mises à jour pouvant être la suppression d'une ou plusieurs hypothèses et/ou la génération d'une ou plusieurs nouvelles hypothèses.

Dans une variante de réalisation de l'invention ledit capteur extérieur est l'un des capteurs suivants ou une combinaison de ces capteurs: un système de navigation par satellite, un magnétomètre, un baroaltimètre, un radioaltimètre, un odomètre, un récepteur DME, un récepteur VOR, un récepteur TACAN, un radar ou un ensemble anémométrique.

Dans une variante de réalisation de l'invention ledit système comporte des moyens supplémentaires pour exécuter une étape de calcul de corrections des données d'observations des capteurs extérieurs.

L'invention a également pour objet un procédé d'hybridation par filtrage multi hypothèses d'un système inertiel **caractérisé en ce qu**'il comporte des moyens pour mettre en oeuvre l'hybridation d'un système inertiel tel que décrit précédemment.

D'autres caractéristiques et avantages de la présente invention apparaîtront mieux à la lecture de la description qui suit en relation aux dessins annexés qui représentent :

La figure 1, un synoptique d'un système inertiel hybride mettant en oeuvre un filtre de Kalman étendu,
La figure 2, un synoptique d'un système inertiel hybride mettant en oeuvre un filtre multi hypothèses selon l'invention,
La figure 3, un synoptique d'une variante du système inertiel hybride selon l'invention utilisant plusieurs plateformes d'intégration de données inertielles,
Les figures 4a, 4b et 4c, plusieurs exemples des résultats obtenus à l'aide du procédé d'hybridation selon l'invention et l'amélioration par rapport à l'état de l'art.

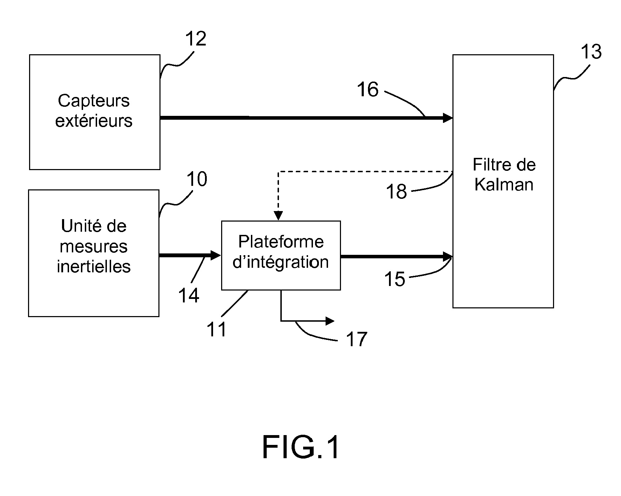

La figure 1 schématise un système inertiel hybride embarqué dans un mobile, par exemple un aéronef, mettant en oeuvre pour effectuer cette hybridation un filtre de Kalman étendu. Ce système comprend une unité de mesures inertielles 10 qui délivre à sa sortie une ou plusieurs mesures 14 correspondant au mouvement du mobile, par exemple son accélération et/ou sa vitesse angulaire. L'unité de mesures inertielles 10 comprend plusieurs senseurs inertiels lesquels peuvent être, par exemple, des accéléromètres et/ou des gyromètres. Dans un cas typique d'utilisation, trois accéléromètres et trois gyromètres sont considérés, chacun des trois étant placé dans un trièdre orthogonal. Le système inertiel comprend également une plateforme d'intégration 11 des données inertielles dont la fonction est d'intégrer les mesures inertielles 14 afin de déterminer un ensemble de mesures 15 instantanées et caractéristiques de la position et/ou du mouvement du mobile. Ces mesures 15 correspondent typiquement à la position, la vitesse et l'attitude du mobile. Lesdites mesures 15 peuvent être entachées d'erreurs dues aux imperfections des senseurs inertiels, c'est pourquoi il est connu d'hybrider ces données inertielles par le biais de capteurs extérieurs 12. Ces capteurs fournissent des données qui forment des observations 16 caractéristiques de la position et/ou du mouvement du mobile. Les données d'observation 16 sont par exemple des mesures de la position et de la vitesse du mobile fournies par un système de positionnement par satellite. Les données d'observation 16 peuvent également inclure une valeur de l'écart type associé auxdites mesures. L'objectif de l'hybridation est d'améliorer l'estimation des données de localisation et navigation du mobile. Pour ce faire, les données d'observations 16 et les mesures inertielles 15 sont traitées conjointement par un filtre de Kalman étendu 13 qui produit un ensemble de corrections. Ces corrections peuvent être des corrections de défaut des senseurs inertiels et/ou des corrections de localisation et navigation du mobile. Les corrections 18 peuvent être réinjectées en entrée de la plateforme d'intégration 11 des données inertielles selon un mécanisme dit en boucle fermée. La plateforme d'intégration 11 produit, suite à la correction 18, une estimation améliorée des données hybrides 15,17. Dans un mécanisme similaire mais fonctionnant en boucle ouverte les corrections de localisation et navigation sont appliquées directement sur les données hybrides 15,17.

Le filtrage de Kalman étendu 13 est un procédé couramment utilisé dans le cadre d'hybridations de systèmes inertiels. Son comportement est récursif et présente principalement deux phases. Une première phase dite de propagation des états qui sert à la description de l'évolution des états modélisés qui sont typiquement la localisation, la navigation ou les défauts inertiels. Le modèle utilisé est couramment appelé un modèle aux erreurs car les états correspondent en fait aux erreurs sur les états qui peuvent être typiquement une erreur sur la position, la vitesse, l'attitude ou une erreur de défauts inertiels. Une seconde phase dite de recalage ou de mise à jour effectue une correction des états à partir d'observations fournies par des capteurs externes. A ce sujet, il est utile de définir un certain nombre de variables qui entrent en jeu dans la mise en oeuvre de ce filtre. Dans la suite de la description, on notera $XE_t$ le vecteur d'état obtenu à l'instant t contenant les valeurs des états issus de la phase de recalage du filtrage de Kalman étendu et $XP_t$ le vecteur d'état propagé obtenu à l'instant t et contenant les valeurs des états issus de la phase de propagation du même filtre. Le procédé mis en oeuvre par le filtrage de Kalman étendu est récursif ce qui signifie que le vecteur d'état propagé $XP_{t-1}$ obtenu à l'instant t-1 est utilisé pour effectuer le recalage du vecteur d'état $XE_t$ à l'instant t.

A titre de rappel, on précise ici les équations, connues de l'Homme du métier, illustrant les deux phases du filtrage de Kalman étendu.

La phase de recalage du vecteur d'état $XE_t$ à l'instant t peut être modélisée à l'aide des relations suivantes connues :

$$XE_t = XP_{t-1} + K_t * Y_t \quad (1)$$

où $K_t$ est le gain du filtre de Kalman, $Y_t$ est le vecteur d'innovation calculé à partir du vecteur $Z_t$ des données d'observations 16, du vecteur d'état propagé à l'instant t-1 et de la matrice de d'observation H selon la relation suivante :

$$Y_t = Z_t - H * XP_{t-1} \quad (2)$$

La matrice d'observation H est un paramètre couramment utilisé lors de la mise en oeuvre d'un filtrage de Kalman étendu, elle sert à projeter le vecteur d'état dans un espace permettant la comparaion avec le vecteur d'observation $Z_t$. La phase de recalage du filtrage de Kalman étendu met également en oeuvre, par le biais d'un algorithme connu de l'Homme du métier, le calcul de la matrice de covariance $PE_t$ associée au vecteur d'état $XE_t$ à partir de celle $PP_{t-1}$ du vecteur d'état propagé $XP_{t-1}$.

La phase de propagation encore appelée phase de prédiction du vecteur d'état à l'instant t s'exécute à l'aide de la relation suivante :

$$XP_t = F * XE_t \quad (3)$$

où F est la matrice d'évolution du modèle dont le calcul est connu de l'Homme du métier. De même la matrice de covariance $PP_t$ du vecteur d'état propagé est également calculée lors de cette phase. La phase de propagation a pour but d'estimer l'évolution du vecteur d'état $XE_t$ par une prédiction de son état futur. Le vecteur d'état propagé $XP_t$ correspond à une estimation du vecteur d'état à l'instant futur t+1.

L'invention consiste notamment à mettre en oeuvre une hybridation prenant en compte la possibilité de propagation non linéaire des états des défauts des senseurs inertiels, comme par exemple le biais accélérométrique ou la dérive gyrométrique. Pour ce faire, le filtrage de Kalman étendu traditionnellement utilisé dans les solutions connues est adapté dans le but d'effectuer un filtrage utilisant plusieurs hypothèses sur les défauts des senseurs inertiels.

Dans une phase d'initialisation, le procédé selon l'invention consiste à définir plusieurs vecteurs d'états basés sur plusieurs hypothèses de défauts des senseurs inertiels. On effectue donc un tirage de N particules basé sur une distribution a priori. Chaque particule est un vecteur comprenant une hypothèse de réalisation des états non linéaires des défauts des senseurs inertiels. Par exemple, si les états non linéaires considérés sont le biais accélérométrique et la dérive gyrométrique, les N particules s'écrivent :

$$P_1 = \left\{ \begin{array}{c} Biais^{(1)} \\ Derive^{(1)} \end{array} \right\} \cdots P_N = \left\{ \begin{array}{c} Biais^{(N)} \\ Derive^{(N)} \end{array} \right\},$$

avec $Biais^{(i)}$ et $Derive^{(i)}$ les hypothèses prises pour la particule d'indice i des valeurs de biais et de dérive.

Les dites hypothèses sont déterminées, par exemple, en tirant aléatoirement une valeur dans une plage de valeurs bornée et échantillonnée avec un pas fixe d'échantillonnage donné. La plage de valeurs est fixée en fonction de la connaissance a priori des plages de variations des états non linéaires que l'on cherche à estimer à l'aide du procédé selon l'invention. Chaque particule ainsi déterminée est affectée d'un poids initial qui peut prendre, par exemple, la valeur 1/N.

Ensuite, on détermine les N vecteurs d'états qui vont servir d'entrée au procédé de filtrage selon l'invention en complétant chaque particule avec les autres états considérés et qui ont une propagation supposée linéaire. Ces états sont avantageusement l'attitude, la position et la vitesse du mobile. On obtient alors les N vecteurs d'états suivants comprenant, d'une part, les hypothèses sur les états non linéaires et, d'autre part, les mesures caractéristiques de la position et des données de navigation du mobile :

$$XP_0^1 = \left\{ \begin{array}{c} Attitude \\ Vitesse \\ Position \\ \vdots \\ Biais^{(1)} \\ Derive^{(1)} \end{array} \right\} \cdots XP_0^N = \left\{ \begin{array}{c} Attitude \\ Vitesse \\ Position \\ \vdots \\ Biais^{(N)} \\ Derive^{(N)} \end{array} \right\}$$

La composition de ces vecteurs d'états peut être généralisée à tout type de mesures caractéristiques du mouvement ou de la position d'un mobile. De même les éléments composants les vecteurs de particules peuvent être étendus à tout type d'erreurs sur des états non linéaires issus de mesures des senseurs inertiels. On peut également étendre l'utilisation des particules à des états non linéaires d'estimation d'erreur de capteurs extérieurs.

La phase d'initialisation précédemment décrite permet d'obtenir les valeurs initiales des vecteurs d'états propagés $XP_0^i$ de chacune des particules i pour i compris entre 1 et N.

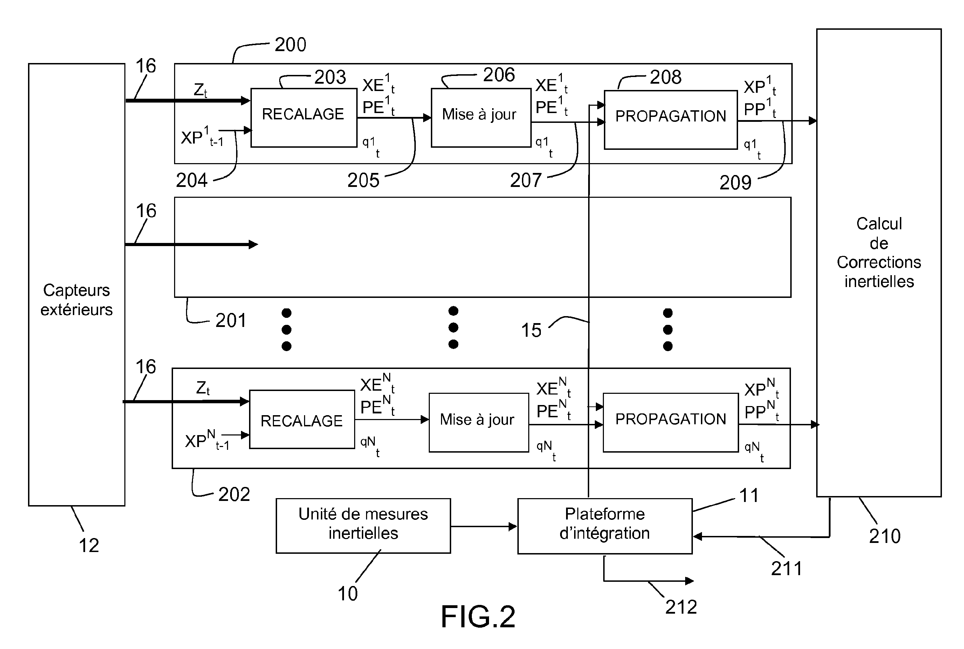

La figure 2 illustre un synoptique de l'architecture fonctionnelle d'un système inertiel selon l'invention. Ce système inertiel hybride comprend certains éléments communs au système selon l'art antérieur présenté à la figure 1. Notamment, on retrouve l'ensemble 12 de capteurs extérieurs délivrant à sa sortie 16 et à un instant t des données d'observations servant au calcul du vecteur d'observation $Z_t$ utilisé dans le filtre d'hybridation. Le système inertiel hybride selon l'invention comprend également une unité de mesures inertielles 10 et une plateforme d'intégration de ces mesures 11 qui délivre à sa sortie des données de localisation et de navigation 15 du mobile. Le système inertiel hybride selon l'invention comprend également un ensemble de N unités de filtrage multi hypothèses 200,201,202 qui réalisent chacune un filtrage selon l'invention desdites données de navigation 15 en prenant en compte l'hypothèse introduite par une des particules précédentes. Chaque unité de filtrage 200 exécute une fonction de recalage 203 et une fonction de propagation 208 ainsi qu'une fonction 206 de mise à jour des particules. Les traitements effectués dans chacune desdites unités de filtrage 200,201,202 sont identiques mais s'appliquent respectivement à chaque vecteur d'état $XP^i_t$.

La fonction de recalage 203 effectue, à l'instant t le recalage, selon les équations mises en oeuvre par un filtrage de Kalman étendu tel que décrit précédemment à l'appui de la figure 1, du vecteur d'état 204 $XP^i_{t-1}$ propagé à l'instant t-1 avec la connaissance du vecteur d'observation $Z_t$. Au démarrage du procédé, le vecteur d'état propagé est le vecteur d'état $XP^i_0$ obtenu à l'issu de la phase d'initialisation à partir de la particule d'indice i. La fonction de recalage 203 délivre à sa sortie, le vecteur d'état recalé $XE^i_t$, sa matrice de covariance $PE^i_t$ ainsi qu'une vraisemblance $q^i_t$ associée audit vecteur d'état recalé.

Le calcul selon l'invention de la vraisemblance $q^i_t$ du vecteur d'état $XE^i_t$ consiste à déterminer un poids relatif pour chaque hypothèse ayant engendré la formation d'une particule i puis de son vecteur d'état associé $XE^i_t$. Ce poids est homogène à la vraisemblance de chaque hypothèse d'erreurs ayant conduit à la création d'une particule. Le calcul de cette vraisemblance prend en compte les observations fournies par les capteurs extérieurs, par exemple, la position et la vitesse, en déduit les erreurs par rapport aux mêmes mesures issues de la plateforme d'intégration de données inertielles et effectue une comparaison de ces erreurs avec les hypothèses prises. En prenant comme hypothèse que le vecteur d'observation $Z_t$ est entaché d'un bruit qui suit une loi Gaussienne et en ayant la connaissance de l'écart type $R_t$ sur ces observations, on peut déterminer la vraisemblance $q^i_t$ de chaque vecteur d'état $XE^i_t$ à l'aide, par exemple, de la relation suivante :

$$q^i_t = p_{e(t)}\left(Z_t - H.XP^i_{t-1}\right) \text{ (4)}$$

où $p_{e(t)}$ est une estimation de la probabilité d'erreur effectuée sur les mesures du vecteur d'observation $Z_t$ et peut être liée à l'écart type $R_t$ associé au vecteur $Z_t$ par la relation suivante :

$$p_{e(t)}\left(Z_t - H.XP^i_{t-1}\right) = \left(\frac{1}{2\pi}\right)^{N/2} \frac{1}{\sqrt{|R_t|}} \exp\left(-\frac{1}{2}\left[Z_t - H.XP^i_{t-1}\right]^T R_t^{-1}\left[Z_t - H.XP^i_{t-1}\right]\right) \text{ (5)}$$

Chaque vraisemblance obtenue est ensuite normalisée par rapport à la somme des vraisemblances de l'ensemble des particules ce qui peut s'exprimer à l'aide de la relation suivante :

$$q^i_t = \frac{q^i_t}{\sum_{i=1}^{N} q^i_t} \text{ (6)}$$

Dans une variante de réalisation, le calcul de la vraisemblance d'une particule peut mettre en oeuvre un filtrage passe bas afin de limiter le bruit entachant les mesures. Ce filtrage peut s'exécuter à l'aide, par exemple, de la relation suivante :

$$q^i_t = q^i_{t-1}.p_{e(t)}\left(Z_t - H.XP^i_{t-1}\right)$$

La sortie 205 de la fonction de recalage composée du triplet {$XE^1_t$, $PE^1_t$, $q^1_t$} est ensuite reliée à l'entrée d'une fonction 206 de mise à jour des particules. Cette fonction 206 effectue notamment la phase d'initialisation décrite précédemment comprenant la création des N particules et des N vecteurs d'états associés. Au cours du procédé de filtrage selon l'invention, des particules peuvent être supprimées ou modifiées en fonction de paramètres extérieurs.

Une variante de l'invention consiste notamment à éliminer du procédé une particule ayant une vraisemblance trop faible, on parle dans ce cas de dégénérescence de la particule. La décision d'élimination peut être basée sur la comparaison de la vraisemblance à un seuil donné. Lorsqu'une particule est éliminée, le procédé selon l'invention se poursuit soit avec un nombre de particules diminué de un, soit en réinitialisant la particule éliminée par la création d'une nouvelle particule à l'aide du procédé décrit pour la phase d'initialisation.

Dans une autre variante de réalisation, le pas de quantification utilisé pour la création des particules est rendu évolutif en fonction d'informations extérieures au procédé comme par exemple une connaissance a priori du profil de variation des mesures inertielles au cours du temps ou un changement d'environnement impactant le mouvement du mobile. Une mise à jour des particules est également possible en prenant en compte les mêmes informations.

Le triplet $\{XE^1_t, PE^1_t, q^1_t\}$ éventuellement modifié par la fonction de mise à jour 206 est ensuite délivré à l'entrée 207 d'une fonction de propagation 208. Cette fonction prend également en entrée les données de navigation 15 issues de la plateforme d'intégration 11 et exécute la phase de propagation d'un filtrage de Kalman étendu telle que décrite précédemment à l'aide notamment de la relation (3) et produit à sa sortie 209 un triplet contenant le vecteur d'état propagé à l'instant t $XP^1_t$, sa matrice de covariance $PP^1_t$ ainsi que la vraisemblance associée $q^1_t$ qui n'a pas été modifiée au cours de cette étape. Le vecteur d'état propagé $XP^1_t$ est ensuite délivré en entrée 204 de la fonction de recalage 203 afin de calculer le vecteur d'état recalé à l'instant t+1 $XE^1_{t+1}$ tel que décrit précédemment.

La description effectuée pour l'unité de filtrage 200 relative à la particule d'indice i reste valable pour l'ensemble des N-1 autres unités de filtrage 201,202 relatives aux particules d'indice allant de 1 à N. L'ensemble des unités de filtrage 200,201,202 délivrent donc à leurs sorties N vecteurs d'états $XP^i_t$ et leurs vraisemblances associées. Ces éléments sont fournis à une unité 210 de calcul des corrections inertielles qui délivre à sa sortie 211 un vecteur de corrections inertielles obtenu en effectuant la somme des vecteurs de corrections inertielles délivrés par chaque unité de filtrage 200,201,202, pondérés par leurs vraisemblances respectives. Ce vecteur de corrections inertielles 211 est fourni à la plateforme d'intégration 11 qui en tient compte afin de délivrer une estimation 212 des données de navigation hybrides.

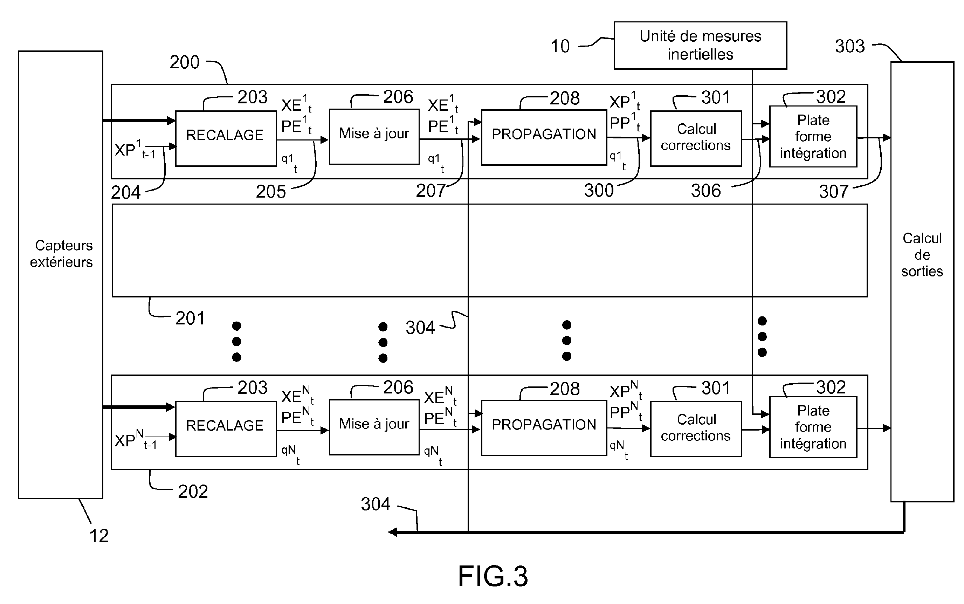

La figure 3 schématise une variante de réalisation du système inertiel hybride selon l'invention pour lequel plusieurs plateformes d'intégration des données inertielles sont utilisées.

Le système représenté à la figure 3 diffère du système décrit précédemment à l'appui de la figure 2 en ce qu'il comprend, pour chaque unité de filtrage 200,201,202 associée à une particule, une unité 301 de calcul des corrections inertielles ainsi qu'une plateforme d'intégration des données inertielles 302. On parle dans ce cas de systèmes multiplateformes. Chacune des plateformes 302 a une entrée reliée à la sortie de l'unité de mesures inertielles 10 et reçoit également en entrée le résultat 306 du calcul 301 des corrections inertielles effectué à partir des sorties des fonctions de propagation 208. Pour chaque hypothèse de particule, la plateforme d'intégration 302 associée délivre à sa sortie une estimée hybride 307 des données de navigation et l'ensemble de ces estimées sont traitées par un module 303 de calcul final des sorties du système de filtrage. Ce module 303 effectue une combinaison des N vecteurs de données de navigation en prenant en compte les vraisemblances $q^i_t$ de chacune des hypothèses associées. Par exemple le module de calcul 303 peut effectuer la somme de ces N vecteurs pondérés par leurs vraisemblances respectives afin de produire un unique vecteur 304 d'estimées hybrides de données de navigation. Ce vecteur unique 304 est fourni aux N fonctions de propagation afin d'effectuer un filtrage en boucle fermée.

Dans une variante de réalisation de l'invention, le procédé de filtrage selon l'invention peut être effectué selon une architecture dite en boucle ouverte. Dans ce cas aucune correction 211,301 n'est transmise à la ou aux plateformes d'intégration. Les corrections appropriées sont ajoutées directement aux estimées hybrides 212,304 de données de navigation.

Les capteurs extérieurs 12 qui fournissent au système d'hybridation selon l'invention les mesures relatives à la position et au mouvement du mobile peuvent être de natures diverses. En particulier, avec un système de navigation par satellite de type GNSS différentes données peuvent être utilisées. Soit on considère la position et la vitesse du porteur déterminées par le système GNSS : on parle alors d'hybridation lâche, soit on considère les informations extraites en amont par le système GNSS que sont les pseudo-distances et les pseudo-vitesses (grandeurs directement issues de la mesure du temps de propagation et de l'effet Doppler des signaux émis par les satellites en direction du récepteur) : on parle alors d'hybridation serrée. Si la technologie du récepteur GNSS le permet on peut aussi réaliser une hybridation dite « ultra serrée » en basant l'hybridation sur les données I et Q des corrélateurs du GNSS par axe satellite. Les capteurs extérieurs 12 peuvent également consister en :

- un récepteur GNSS bi-antenne qui peut fournir une mesure du cap du porteur, de son tangage ou de son roulis,
- un ensemble d'au moins trois récepteurs GNSS présentant des antennes non alignées qui délivrent les trois angles de cap, de roulis et de tangage du porteur,

- un radioaltimètre ou un baroaltimètre qui fournit l'altitude du porteur,
- un magnétomètre qui fournit le cap magnétique,
- un récepteur de type DME (Distance Measuring Equipment) qui délivre la distance du porteur à une balise,
- un récepteur de type VOR (Very High Frequency Omnidirectional Range) qui donne le relèvement magnétique du porteur par rapport à une station au sol,
- un récepteur de type TACAN (Tactical Air Navigation) qui regroupe les propriétés d'un récepteur DME et d'un récepteur VOR,
- un odomètre qui délivre la vitesse du porteur au sol,
- un ensemble anémométrique qui permet de calculer la vitesse air du porteur en axe géographique,
- un radar qui délivre la vitesse du porteur.

Enfin, comme introduit précédemment lors de la revue des états possibles dans les vecteurs d'état, des corrections peuvent également être délivrées à partir du système hybride selon l'invention vers les capteurs extérieurs 12. Par exemple, l'hybridation peut permettre d'identifier un biais sur une mesure de position déterminée par un système de positionnement par satellite. L'envoi de corrections vers ces capteurs extérieurs permet d'améliorer encore la performance de l'ensemble des mesures de position et de mouvement disponibles.

Le procédé et le système selon l'invention présentent l'avantage principal d'améliorer la performance des estimations de données de navigation et/ou de position d'un mobile lorsque les senseurs inertiels ont un comportement non linéaire.

En particulier, lorsque les défauts des données inertielles présentent des sauts d'amplitude, le procédé et le système selon l'invention permettent une plage de tolérance des défauts plus large ainsi qu'une stabilisation beaucoup plus rapide des erreurs de navigation.

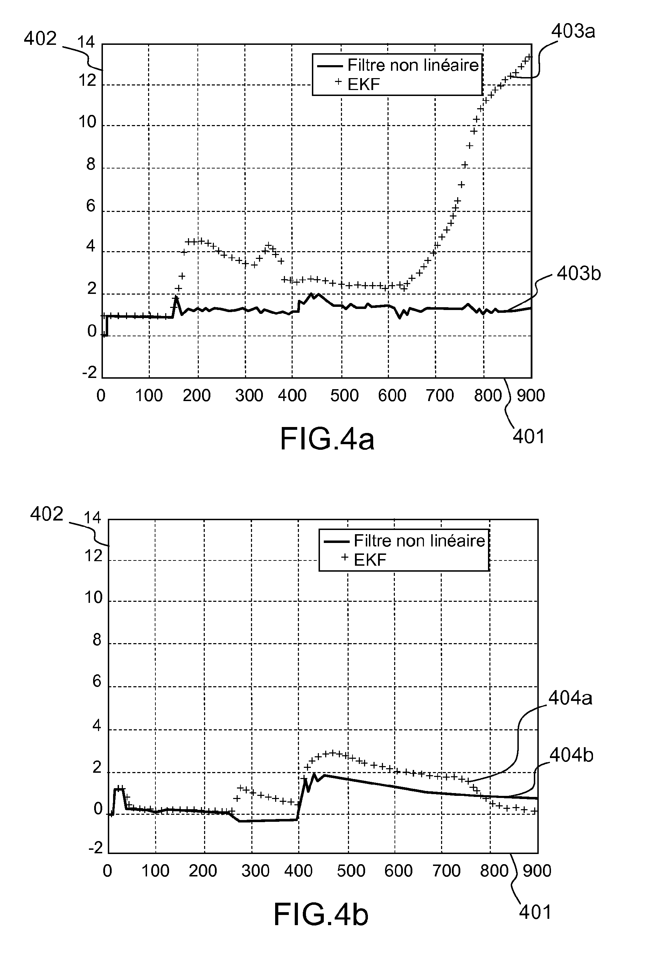

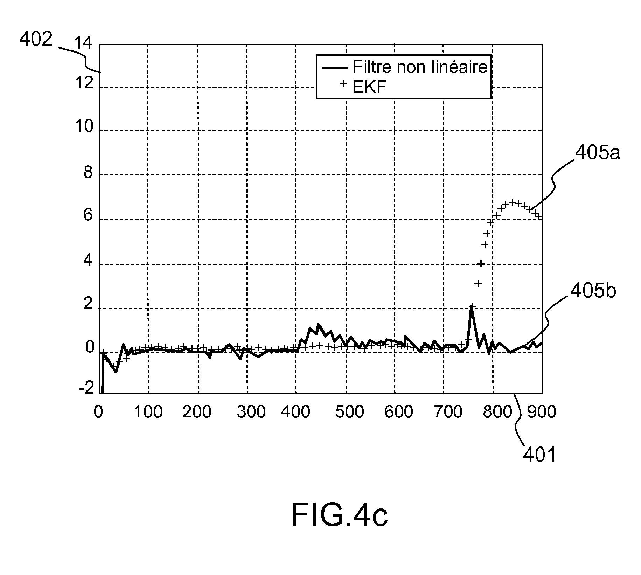

Les figures 4a, 4b et 4c présentent des résultats obtenus par simulation du procédé d'hybridation selon l'invention. Ces simulations ont été effectuées en utilisant comme capteurs extérieurs un système de positionnement par satellite de type GNSS ainsi qu'un baroaltimètre. Les senseurs inertiels considérés sont trois gyromètres et trois accéléromètres. Les mesures d'incrément d'angle délivrées par les gyromètres et d'incréments de vitesse délivrées par les accéléromètres sont affectées de différentes dérives ou biais fixes et variables en amplitude ainsi que de bruit aléatoire. Des sauts de biais et de dérive sont respectivement ajoutés sur les sorties des six senseurs inertiels considérés.

Les figures 4a, 4b et 4c représentent les erreurs entre la valeur de référence de la trajectoire d'entrée et la valeur obtenue en sortie du procédé d'hybridation dans un repère ou l'axe des abscisses 401 est l'axe du temps exprimé en secondes et l'axe des ordonnées 402 est exprimé en degrés. La figure 4a illustre l'erreur de roulis obtenue dans le cas d'un procédé d'hybridation selon l'art antérieur 403a et dans le cas du procédé selon l'invention 403b. De même la figure 4b illustre l'erreur de tangage dans le cas de l'art antérieur 404a et de l'invention 404b. Enfin la figure 4c illustre l'erreur de cap dans le cas d'utilisation du procédé de l'art antérieur 405a et du procédé selon l'invention 405b.

On observe notamment que les sauts d'amplitude de biais et de dérive sur les mesures des senseurs inertiels engendrent des comportements divergents dans le cas d'utilisation d'un filtre de Kalman étendu classique. L'utilisation d'un filtrage multi hypothèses selon l'invention présente l'avantage de converger à nouveau rapidement à la suite de ces sauts d'amplitude. De plus le filtrage multi hypothèses permet d'identifier ces sauts dans les défauts des erreurs inertielles, sa réactivité est quasi instantanée évitant ainsi que le procédé de filtrage diverge.

## Revendications

1. Système inertiel hybride embarqué dans un porteur mobile comportant une unité de mesures inertielles (10) délivrant des mesures de variation d'angle $\Delta\theta$ et/ou des mesures de variation de vitesse $\Delta V$ (14), au moins une plateforme d'intégration de données inertielles (11,302) recevant les mesures de variation d'angle $\Delta\theta$ et/ou les mesures de variation de vitesse $\Delta V$ (14) et produisant des mesures (15,304) instantanées de la localisation et/ou de la navigation dudit porteur mobile, au moins un capteur extérieur (12) délivrant des mesures d'observation (16) de la localisation et/ou de la navigation dudit porteur mobile et un filtre d'hybridation multi hypothèses recevant lesdites mesures instantanées (15,304) et lesdites mesures d'observation (16) et délivrant des corrections (211,306) aux plateformes d'intégration de données inertielles (11,302) lesquelles délivrent une estimation hybride (212,304,307) de la localisation et/ou de la navigation dudit porteur mobile, ledit système étant **caractérisé en ce que** ledit filtre d'hybridation multi hypothèses met en oeuvre au moins les étapes suivantes :

   ○ une étape d'initialisation effectuant la génération d'une pluralité de vecteurs d'états $XP^i_0$ représentatifs de l'état dudit système inertiel comprenant d'une part au moins un état dédié à la localisation et/ou à la navigation (15,304) dudit porteur mobile et d'autre part des hypothèses de défauts de l'unité de mesures inertielles (10),
   ○ une étape de recalage (203) exécutant, pour chacun desdits vecteurs d'états, la phase de recalage d'un filtrage de Kalman étendu et produisant en sortie un vecteur d'état recalé $XE^i_t$ et sa matrice de covariance associée $PE^i_t$,

○ une étape de propagation (208) exécutant, pour chacun desdits vecteurs d'états, la phase de propagation d'un filtrage de Kalman étendu et produisant en sortie un vecteur d'état propagé $XP^i_t$, sa matrice de covariance associée $PP^i_t$, et leur vraisemblance associée $q^i_t$,

○ une étape de détermination de la vraisemblance $q^i_t$ dudit vecteur d'état recalé $XE^i_t$, en fonction de la comparaison entre les données d'observations (16) et le vecteur d'état propagé,

○ une étape de calcul (210,301) de corrections recevant la pluralité de vecteurs d'états propagés $XP^i_t$, leurs matrices de covariance associées $PP^i_t$ et leur vraisemblance associée $q^i_t$ et produisant lesdites corrections inertielles (211,306) des erreurs de position et de mouvement dudit mobile porteur, lesdites corrections (211,306) étant délivrées aux plateformes d'intégration de données inertielles (11,302).

2. Système inertiel hybride selon la revendication 1 **caractérisé en ce que** la vraisemblance $q^i_t$ du vecteur d'état $XE^i_t$, est déterminée en fonction de la comparaison entre le vecteur $Z_t$ de données d'observations (16) et le vecteur d'état propagé $XP^i_{t-1}$ à l'aide de la relation suivante :

$$q_t^i = p_{e(t)}\left(Z_t - H.XP^i_{t-1}\right),$$ où H est une matrice d'observation définie à l'aide d'un filtrage de Kalman étendu et $p_{e(t)}()$ est une fonction de probabilité Gaussienne donnée par la relation suivante :

$$p_{e(t)}\left(Z_t - H.XP^i_{t-1}\right) = \left(\frac{1}{2\pi}\right)^{N/2} \frac{1}{\sqrt{|R_t|}} \exp\left(-\frac{1}{2}\left[Z_t - H.XP^i_{t-1}\right]^T R_t^{-1}\left[Z_t - H.XP^i_{t-1}\right]\right),$$

où $R_t$ est l'écart type du vecteur $Z_t$.

3. Système inertiel hybride selon la revendication 2 **caractérisé en ce que** la vraisemblance $q^i_t$ obtenue est filtrée à l'aide d'un filtre passe bas.

4. Système inertiel hybride selon l'une des revendications précédentes **caractérisé en ce que** ladite étape de calcul (210) de corrections met en oeuvre la somme (211) des corrections obtenues à partir de chaque hypothèse de vecteur d'état, chaque correction étant pondérée par la vraisemblance $q^i_t$ du vecteur d'état correspondant.

5. Système inertiel hybride selon l'une des revendications 1 à 3 **caractérisé en ce que** ledit système comporte une plate forme d'intégration (302) pour chaque hypothèse de vecteur d'état, ladite étape de calcul (301) de corrections délivre une correction (306) indépendante à chaque plate forme d'intégration (302) et ledit système comporte en plus une étape (303) de calcul de sorties de filtrage qui reçoit l'ensemble des estimations hybrides (307) délivrées par chacune des plateformes d'intégration (302) et en effectue la somme pondérée par chacune des vraisemblances $q^i_t$ associées afin de produire une estimation hybride unique (304).

6. Système inertiel hybride selon l'une des revendications précédentes **caractérisé en ce que** ledit système inertiel hybride met en oeuvre une architecture dite en boucle ouverte et que lesdites corrections (211,306) sont ajoutées directement à l'estimation hybride (212,304) des données de localisation et de navigation dudit porteur mobile.

7. Système inertiel hybride selon l'une des revendications précédentes **caractérisé en ce que** ledit filtre d'hybridation multi hypothèses exécute en plus une étape de mise à jour (206) des particules au cours de laquelle lesdites hypothèses de défauts de l'unité de mesures inertielles (10) déterminés pendant la phase d'initialisation sont mises à jour en fonction d'une connaissance a priori du comportement de ladite unité de mesures inertielles (10), les mises à jour pouvant être la suppression d'une ou plusieurs hypothèses et/ou la génération d'une ou plusieurs nouvelles hypothèses.

8. Système inertiel hybride selon l'une des revendications précédentes **caractérisé en ce que** ledit capteur extérieur (12) est l'un des capteurs suivants ou une combinaison de ces capteurs: un système de navigation par satellite, un magnétomètre, un baroaltimètre, un radioaltimètre, un odomètre, un récepteur DME, un récepteur VOR, un récepteur TACAN, un radar ou un ensemble anémométrique.

9. Système inertiel hybride selon l'une des revendications précédentes **caractérisé en ce que** ledit système comporte des moyens supplémentaires pour exécuter une étape de calcul de corrections des données d'observations (16) des capteurs extérieurs (12).

10. Procédé d'hybridation par filtrage multi hypothèses d'un système inertiel **caractérisé en ce qu'**il comporte des moyens pour mettre en oeuvre l'hybridation d'un système inertiel selon l'une des revendications précédentes.

12

Capteurs
extérieurs

16

13

Filtre de
Kalman

18

10

Unité de
mesures
inertielles

14

Plateforme
d'intégration

15

11

17

FIG.1

Capteurs extérieurs

16

$Z_t$

200

203

RECALAGE

$XE^1_t$
$PE^1_t$

$q1_t$

$XP^1_{t-1}$

204

205

206

Mise à jour

$XE^1_t$
$PE^1_t$

$q1_t$

207

208

PROPAGATION

$XP^1_t$
$PP^1_t$

$q1_t$

209

16

201

15

16

$Z_t$

RECALAGE

$XE^N_t$
$PE^N_t$

$qN_t$

$XP^N_{t-1}$

202

Mise à jour

$XE^N_t$
$PE^N_t$

$qN_t$

PROPAGATION

$XP^N_t$
$PP^N_t$

$qN_t$

Calcul de Corrections inertielles

12

Unité de mesures inertielles

10

Plateforme d'intégration

11

210

211

212

FIG.2

EP 2 241 856 A1

**FIG.3**

FIG.4a

FIG.4b

FIG.4c

Europäisches Patentamt
European Patent Office
Office européen des brevets

## RAPPORT DE RECHERCHE EUROPEENNE

Numéro de la demande

EP 10 15 9113

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 862 764 A1 (HONEYWELL INT INC [US]) 5 décembre 2007 (2007-12-05) <br> * alinéas [0002], [0005], [0006] * <br> * alinéas [0027], [0028] * <br> * alinéa [0067] - alinéa [0069] * <br> * alinéa [0084] - alinéa [0089] * <br> * figures 1,8,9 * <br> ----- | 1-10 | INV. G01C21/16 G01S5/14 |
| A | EP 2 026 037 A2 (HONEYWELL INT INC [US]) 18 février 2009 (2009-02-18) <br> * alinéa [0001] - alinéa [0005] * <br> * alinéa [0019] - alinéa [0025] * <br> * figure 1 * <br> ----- | 1-10 | |
| A | US 2006/106533 A1 (HIROKAWA RUI [JP]) 18 mai 2006 (2006-05-18) <br> * alinéa [0040] - alinéa [0043] * <br> * figures 1,20 * <br> ----- | 1-10 | |

DOMAINES TECHNIQUES RECHERCHES (IPC)

G01C
G01S

Le présent rapport a été établi pour toutes les revendications

| Lieu de la recherche | Date d'achèvement de la recherche | Examinateur |
|---|---|---|
| La Haye | 22 juillet 2010 | Yosri, Samir |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 10 15 9113

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-07-2010

| Document brevet cité au rapport de recherche | | Date de publication | Membre(s) de la famille de brevet(s) | | Date de publication |
|---|---|---|---|---|---|
| EP 1862764 | A1 | 05-12-2007 | CA<br>US | 2590134 A1<br>2007282528 A1 | 30-11-2007<br>06-12-2007 |
| EP 2026037 | A2 | 18-02-2009 | JP<br>US | 2009098125 A<br>2009048779 A1 | 07-05-2009<br>19-02-2009 |
| US 2006106533 | A1 | 18-05-2006 | JP<br>US | 2006138834 A<br>2007244640 A1 | 01-06-2006<br>18-10-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0073815 A